# EUROPEAN PATENT SPECIFICATION

(11) **EP 3 653 650 B1**
(45) Date of publication and mention of the grant of the patent: **20.08.2025**
(21) Application number: 19204920.3
(22) Date of filing: 23.10.2019
(51) Int. Cl.: C08F 2/00, C08L 23/12

(54) **POLYPROPYLENE RESIN COMPOSITION, PROCESS FOR PREPARING THE SAME, AND ARTICLE MOLDED THEREFROM**
POLYPROPYLENHARZZUSAMMENSETZUNG, VERFAHREN ZUR HERSTELLUNG DAVON UND DARAUS GEFORMTER ARTIKEL
COMPOSITION DE RÉSINE DE POLYPROPYLÈNE, SON PROCÉDÉ DE PRÉPARATION ET ARTICLE MOULÉ À PARTIR DE CELLE-CI

(30) Priority: 14.11.2018 KR 20180139580
(43) Date of publication of application: 20.05.2020
(73) Proprietor: Hanwha TotalEnergies Petrochemical Co., Ltd., Seosan-si, Chungcheongnam-do 31900 (KR)
(72) Inventor: PARK, Daeho, 31900 Chungcheongnam-do (KR); HA, Jungguk, 31900 Chungcheongnam-do (KR); CHUN, YongSung, 31900 Chungcheongnam-do (KR)
(74) Representative: dompatent von Kreisler Selting Werner - Partnerschaft von Patent- und Rechtsanwälten mbB

(56) References cited:
- EP-A1- 2 141 200
- EP-A2- 0 316 693
- US-A1- 2015 197 583
- US-A1- 2016 304 709

## Description

### Technical Field

The present invention relates to a polypropylene resin composition, a process for preparing the same, and an article molded therefrom. Specifically, the present invention relates to a polypropylene resin composition having high fluidity and excellent moldability, a process for preparing the polypropylene resin composition, and an article molded from the polypropylene resin composition, which is excellent in balance between rigidity and impact resistance, suppressed in such defects in appearance as flow marks, and excellent in elongation and gloss.

### Background Art of the Invention

Attempts have been made to use articles prepared by injection molding polypropylene resins as parts of automobiles or parts of electronic products. In such event, the fuel efficiency of the automobiles can be improved due to the lightweight of the parts. In addition, polypropylene resins have the advantage that they not only can lower the manufacturing cost of the articles since they are cheaper than other resins, but also are easy to recycle.

However, when an article is prepared by injection molding a polypropylene resin for use as a part of an automobile or an electronic product, such defects in appearance as flow marks may be generated. In addition, if such physical properties of a molded article as elongation are low, there is a limit to use it as an automotive part. Meanwhile, in order to be used as a material for an electronic product, it is preferable that the gloss of a molded article is excellent.

In order to solve such defects in appearance as flow marks or gels that may be generated in a molded article of a polypropylene resin, a method of coating the molded article may be used. In addition, in order to increase the elongation of a molded article, a method of increasing the content of the ethylene-propylene rubber copolymer in the polypropylene resin or adding an ethylene-based rubber may be used. In such event, however, the productivity is reduced or the cost of adding the rubber copolymer increases the overall production cost, which is undesirable.

Accordingly, there has been a demand for the development of a polypropylene resin composition, which can suppress the appearance defects and can manufacture a molded article that is excellent in elongation and gloss.

### Disclosure of the Invention

### Technical Problem to Solve

An object of the present invention is to provide a polypropylene resin composition having high fluidity and excellent moldability, and is capable of providing an article molded therefrom, which is excellent in balance between rigidity and impact resistance, suppressed in such defects in appearance as flow marks, and excellent in elongation and gloss.

Another object of the present invention is to provide a process for preparing the polypropylene resin composition.

Still another object of the present invention is to provide an article molded from the polypropylene resin composition, which is excellent in balance between rigidity and impact resistance, suppressed in such defects in appearance as flow marks, and excellent in elongation and gloss.

### Solution to the Problem

According to an embodiment of the present invention for achieving the above object, there is provided a polypropylene resin composition, which comprises an ethylene-propylene block copolymer resin, wherein the ethylene-propylene block copolymer resin comprises 70 to 95% by weight of a homopolypropylene component and 5 to 30% by weight of an ethylene-propylene rubber copolymer component, the content of ethylene in the ethylene-propylene block copolymer resin is 3 to 15% by weight, the content of ethylene in the ethylene-propylene rubber copolymer component is 20 to 50% by mole, the ethylene-propylene block copolymer resin has a melt index of 30 to 120 g/10 minutes when measured at 230°C under a load of 2.16 kg, and the ratio of intrinsic viscosities between the ethylene-propylene rubber copolymer component and the intrinsic viscosity of the homopolypropylene component in the ethylene-propylene block copolymer resin is 4 to 6 and when the polypropylene resin composition is injection molded using a spiral flow mold, the ratio of contrasts between the cloudy portion and the glossy portion is 0.5 or less.

The glass transition temperature, as measured by a dynamic mechanical analyzer, of the rubber phase in the ethylene-propylene block copolymer resin may have a shape in which two peaks overlap with each other in a temperature range of -55 to - 30°C.

In addition, the ethylene-propylene block copolymer resin may be one in which the homopolypropylene component and the ethylene-propylene rubber copolymer component are sequentially polymerized.

When the polypropylene resin composition according to the embodiment of the present invention is injection molded using a spiral flow mold, the ratio of contrasts between the cloudy portion and the glossy portion is 0.5 or less.

The polypropylene resin composition according to the embodiment of the present invention may further comprise at least one additive selected from the group consisting of a heat stabilizer, a neutralizer, a reinforcement, a filler, a weathering stabilizer, an antistatic agent, a lubricant, a slip agent, a nucleating agent, a flame retardant, a pigment, and a dye.

Specifically, the polypropylene resin composition according to the embodiment of the present invention may further comprise 0.1 to 0.5 parts by weight of a heat stabilizer per 100 parts by weight of the composition.

Preferably, the heat stabilizer may be at least one selected from the group consisting of tetrakis(methylene(3,5-di-t-butyl-4-hydroxy)hydrosilylnate), 1,3,5-trimethyl-tris(3,5-di-t-butyl-4-hydroxybenzene), and tris(2,4-di-t-butylphenyl)phosphite.

According to another embodiment of the present invention, there is provided a process for preparing a polypropylene resin composition, which comprises a first polymerization step of polymerizing a homopolypropylene in two or more consecutive reactors; and a second polymerization step of copolymerizing an ethylene-propylene rubber copolymer component by supplying ethylene and propylene in the presence of the polymerized homopolypropylene to obtain an ethylene-propylene block copolymer resin.

In the above preparation process, each polymerization step may be carried out in the presence of a Ziegler-Natta catalyst. Here, the Ziegler-Natta catalyst may be synthesized by supporting at least one titanium chloride selected from TiCl₃ and TiCl₄ on a magnesium chloride (MgCl₂) carrier.

In addition, as a cocatalyst of the Ziegler-Natta catalyst, at least one alkyl aluminum compound selected from the group consisting of triethyl aluminum, diethylchloro aluminum, tributyl aluminum, trisisobutyl aluminum, and trioctyl aluminum may be used; and, as an external electron donor, at least one organosilane compound selected from the group consisting of diphenyldimethoxysilane, phenyltrimethoxysilane, phenylethyldimethoxysilane, phenylmethyldimethoxysilane, methoxytrimethylsilane, isobutyltrimethoxysilane, diisobutyldimethoxysilane, diisopropyldimethoxysilane, di-t-butyldimethoxysilane, dicyclopentyldimethoxysilane, cyclohexylmethyldimethoxysilane, and dicyclohexyldimethoxysilane may be used.

In the above preparation process, the first polymerization step and the second polymerization step may be carried out in the same polymerization reactor or different polymerization reactors.

Preferably, the first polymerization step is a step of polymerizing the homopolypropylene in the presence of a Ziegler-Natta catalyst in two or more bulk polymerization reactors, and the second polymerization step is a step of copolymerizing the ethylene-propylene rubber copolymer component by supplying ethylene and propylene in the presence of the polymerized homopolypropylene and a Ziegler-Natta catalyst in a gas-phase polymerization reactor to obtain the ethylene-propylene block copolymer resin.

The melt index, when measured at 230°C under a load of 2.16 kg, of the homopolypropylene obtained in the final polymerization reactor of the first polymerization step may be 100 to 250 g/10 minutes.

In addition, the molar ratio of the ethylene content to the total amount of olefins present in the gas-phase polymerization reactor in which the second polymerization step is carried out may be 0.30 to 0.90.

According to still another embodiment of the present invention, there is provided a polypropylene resin article molded from the polypropylene resin composition.

Preferably, the polypropylene resin article according to the embodiment of the present invention has an elongation of 20% or more and a gloss of 80% or more.

The polypropylene resin article according to the embodiment of the present invention may be selected from the group consisting of automobile interior and exterior parts and exterior parts of home appliances and electronic products with high gloss.

### Advantageous Effects of the Invention

The polypropylene resin composition according to the embodiment of the present invention is excellent in moldability since it has high fluidity. The article molded from the polypropylene resin composition is excellent in balance between rigidity and impact resistance, suppressed in such defects in appearance as flow marks, and excellent in elongation and gloss. Thus, the polypropylene resin article according to the embodiment of the present invention may be advantageously used as automobile interior and exterior parts, exterior parts of home appliances and electronic products with high gloss, or the like.

### Brief Description of the Drawings

Fig. 1 is a graph of a dynamic mechanical analysis of the ethylene-propylene block copolymer resin of Example 1.
Fig. 2 is a graph of a dynamic mechanical analysis of the ethylene-propylene block copolymer resin of Comparative Example 1.

### Detailed Description for Carrying out the Invention

Hereinafter, the present invention will be described in more detail.

The polypropylene resin composition according to an embodiment of the present invention comprises an ethylene-propylene block copolymer resin, wherein the ethylene-propylene block copolymer resin comprises 70 to 95% by weight of a homopolypropylene component and 5 to 30% by weight of an ethylene-propylene rubber copolymer component, the content of ethylene in the ethylene-propylene block copolymer resin is 3 to 15% by weight, the content of ethylene in the ethylene-propylene rubber copolymer component is 20 to 50% by mole, the ethylene-propylene block copolymer resin has a melt index of 30 to 120 g/10 minutes when measured at 230°C under a load of 2.16 kg, and the ratio of intrinsic viscosities between the ethylene-propylene rubber copolymer component and the homopolypropylene component in the ethylene-propylene block copolymer resin is 4 to 6 and when the polypropylene resin composition is injection molded using a spiral flow mold, the ratio of contrasts between the cloudy portion and the glossy portion is 0.5 or less.

The polypropylene resin composition according to an embodiment of the present invention comprises an ethylene-propylene block copolymer resin. In such event, the ethylene-propylene block copolymer resin comprises a homopolypropylene component and an ethylene-propylene rubber copolymer component.

Preferably, the glass transition temperature, as measured by a dynamic mechanical analyzer, of the rubber phase in the ethylene-propylene block copolymer resin may have a shape in which two peaks overlap with each other in a temperature range of -55 to -30°C.

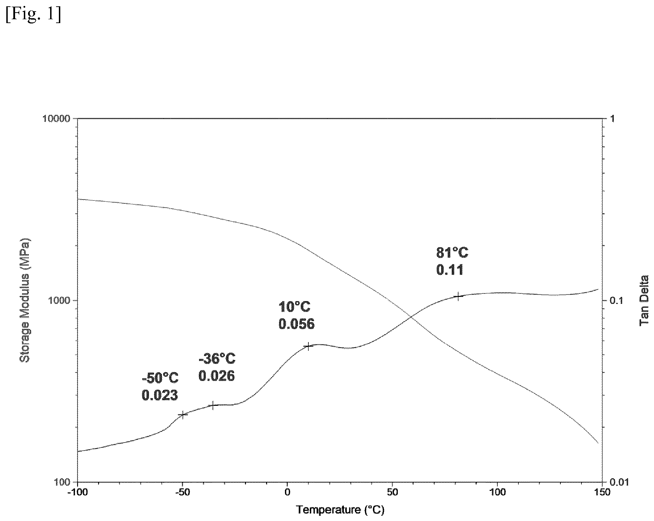

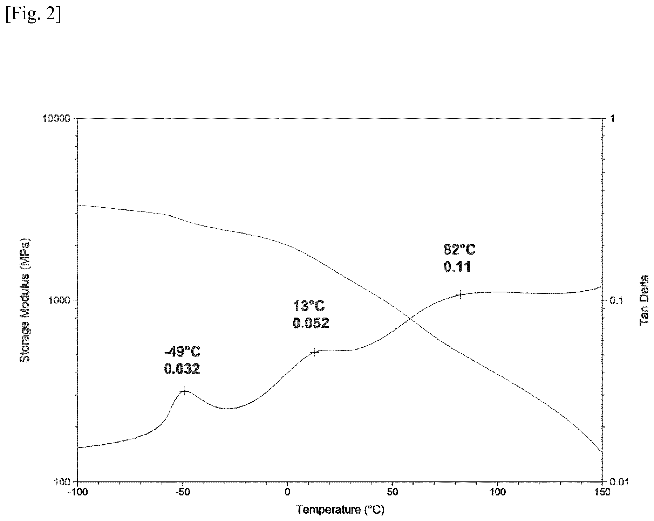

The dynamic mechanical analysis allows measuring the glass transition temperature (Tg) of a polymer material through the tan d (i.e., the ratio of loss modulus and storage modulus) measured with respect to temperature in a temperature range of - 100 to 150°C. The ethylene-propylene block copolymer resin of the present invention shows a wide glass transition temperature of the rubber phase in which two peaks overlap with each other in a temperature of -55 to -30°C as shown in Fig. 1. Thanks to the above, the interface between the homopolypropylene and the rubber phase of the ethylene-propylene block copolymer resin can be stabilized to have a high elongation, which is the object of the present invention. If the glass transition phenomenon occurs in the form of a single peak near -50°C as shown in Fig. 2, the interface between the homopolypropylene and the rubber phase of the ethylene-propylene block copolymer resin cannot be sufficiently stabilized, which may lower the elongation of the resin composition.

In addition, the ethylene-propylene block copolymer resin may be one in which the homopolypropylene component and the ethylene-propylene rubber copolymer component are sequentially polymerized.

In such event, the content of the homopolypropylene component is 70 to 95% by weight and the content of the ethylene-propylene rubber copolymer component is 5 to 30% by weight based on the total weight of the ethylene-propylene block copolymer resin. Preferably, the content of the homopolypropylene component is 80 to 90% by weight and the content of the ethylene-propylene rubber copolymer component is 10 to 20% by weight based on the total weight of the ethylene-propylene block copolymer resin.

If the content of the ethylene-propylene rubber copolymer component in the ethylene-propylene block copolymer resin is less than 5% by weight, the impact strength of a molded article may be deteriorated due to the low content of the rubber component. On the other hand, if this content exceeds 30% by weight, the flexural strength and tensile strength of a molded article may be relatively deteriorated, which is not preferable. In such event, the content of the ethylene-propylene rubber copolymer in the ethylene-propylene block copolymer resin may be measured as the amount of a solvent extract. Here, the solvent is preferably xylene.

The content of ethylene in the ethylene-propylene block copolymer resin is 3 to 15% by weight, preferably 4 to 12% by weight, more preferably 4 to 8% by weight. If the content of ethylene in the ethylene-propylene block copolymer resin is less than 3% by weight, the impact resistance of a molded article may be deteriorated. On the other hand, if the content of ethylene exceeds 15% by weight, the flexural strength and gloss of a molded article may be deteriorated, which is not preferable.

Meanwhile, the content of ethylene in the ethylene-propylene rubber copolymer component, as a component of the ethylene-propylene block copolymer resin, is 20 to 50% by mole, preferably 30 to 40% by mole. If the ethylene content is less than 20% by mole, the impact resistance of a molded article may be deteriorated. On the other hand, if the content of ethylene exceeds 15% by weight, the flexural strength and gloss of a molded article may be deteriorated, which is not preferable.

The ethylene-propylene block copolymer resin has a melt index (MI) of 30 to 120 g/10 minutes, preferably 30 to 100 g/10 minutes, more preferably 30 to 60 g/10 minutes, when measured at 230°C under a load of 2.16 kg according to ASTM D1238. The higher the melt index, the higher the fluidity of the composition. If the melt index exceeds the upper limit of the above range, however, the elongation of a molded article may be deteriorated, which is not preferable.

The ratio (η_{XS}/η_{homoPP}) of intrinsic viscosities between the ethylene-propylene rubber copolymer component (i.e., xylene soluble; XS) and the homopolypropylene component (homoPP) in the ethylene-propylene block copolymer resin is 4 to 6. If the ratio (η_{XS}/η_{homoPP}) of intrinsic viscosities is less than 3, flow marks may be severely generated on the appearance of a molded article when the polypropylene resin composition is injection molded. On the other hand, if this ratio exceeds 8, the fluidity of the polypropylene resin composition is reduced, whereby the improvements in moldability cannot be achieved.

In addition, when the polypropylene resin composition according to the embodiment of the present invention is injection molded using a spiral flow mold, the ratio of contrasts between the cloudy portion and the glossy portion is 0.5 or less.
If the ratio of contrasts is 0.5 or less, such defects in appearance as flow marks are hardly observed in a molded article produced from the polypropylene resin composition.

The polypropylene resin composition according to the embodiment of the present invention may further comprise conventional additives within a range not departing from the scope of the present invention. For examples, the polypropylene resin composition may comprise a heat stabilizer, a neutralizer, a reinforcement, a filler, a weathering stabilizer, an antistatic agent, a lubricant, a slip agent, a nucleating agent, a flame retardant, a pigment, a dye, or the like, but it is not limited thereto.

Preferably, the polypropylene resin composition according to the embodiment of the present invention may further comprise a heat stabilizer to increase the heat stability thereof. In such event, the heat stabilizer may be added in an amount of 0.1 to 0.5 parts by weight, preferably 0.2 to 0.3 parts by weight, per 100 parts by weight of the polypropylene resin composition. If the content of the heat stabilizer is less than 0.1 part by weight, it is difficult to secure long-term heat stability. On the other hand, if the content of the heat stabilizer exceeds 0.5 parts by weight, the heat stabilizer may be eluted, or the economic efficiency of the product may be reduced, which is not preferable.

The heat stabilizer may be a phenol-based antioxidant, a phosphite-based antioxidant, or the like. Specifically, it may be at least one antioxidant selected from the group consisting of tetrakis(methylene(3,5-di-t-butyl-4-hydroxy)hydrosilylnate), 1,3,5-trimethyl-tris(3,5-di-t-butyl-4-hydroxybenzene), and tris(2,4-di-t-butylphenyl)phosphite.

The process for preparing a polypropylene resin composition according to another embodiment of the present invention comprises a first polymerization step of polymerizing a homopolypropylene in two or more consecutive reactors; and a second polymerization step of copolymerizing an ethylene-propylene rubber copolymer component by supplying ethylene and propylene in the presence of the polymerized homopolypropylene to obtain an ethylene-propylene block copolymer resin.

In such event, each polymerization may adopt a conventional method and reaction conditions known in the art, such as a slurry method, a bulk method, a gas phase method, and the like.

Meanwhile, each polymerization step in the above preparation process may be carried out in the presence of a Ziegler-Natta catalyst. The Ziegler-Natta catalyst may be one known in the art without any particular limitation thereto. Specifically, it may be synthesized by supporting at least one titanium chloride selected from TiCl₃ and TiCl₄ on a magnesium chloride (MgCl₂) carrier. It is preferable to use a cocatalyst and an external electron donor together with the catalyst.

As the cocatalyst, an alkyl aluminum compound may be used. Examples of the alkyl aluminum compound included triethyl aluminum, diethylchloro aluminum, tributyl aluminum, trisisobutyl aluminum, and trioctyl aluminum, but it is not limited thereto.

In addition, as the external electron donor, an organosilane compound is preferable. Examples of the organosilane compound include diphenyldimethoxysilane, phenyltrimethoxysilane, phenylethyldimethoxysilane, phenylmethyldimethoxysilane, methoxytrimethylsilane, isobutyltrimethoxysilane, diisobutyldimethoxysilane, diisopropyldimethoxysilane, di-t-butyldimethoxysilane, dicyclopentyldimethoxysilane, cyclohexylmethyldimethoxysilane, and dicyclohexyldimethoxysilane, but it is not limited thereto.

In the preparation process according to the embodiment of the present invention, the first polymerization step and the second polymerization step may be carried out in the same polymerization reactor or different polymerization reactors.

Preferably, the first polymerization step is a step of polymerizing a homopolypropylene in the presence of a Ziegler-Natta catalyst in two or more bulk polymerization reactors, and the second polymerization step is a step of copolymerizing an ethylene-propylene rubber copolymer component by supplying ethylene and propylene in the presence of the polymerized homopolypropylene and a Ziegler-Natta catalyst in a gas-phase polymerization reactor to obtain an ethylene-propylene block copolymer resin.

Here, the melt index of the homopolypropylene obtained in the final polymerization reactor of the first polymerization step may be 100 to 250 g/10 minutes when measured at 230°C under a load of 2.16 kg. In such event, each reactor may be operated such that the melt index of the homopolypropylene polymerized in each of the two or more bulk polymerization reactors gradually decreases. Alternatively, each reactor may be operated such that the melt index of the homopolypropylene polymerized in each reactor is the same. The melt index of the polymer produced in each polymerization reactor may be adjusted by the amount of hydrogen fed to each polymerization reactor.

Subsequently, the homopolypropylene obtained in the first polymerization step is transferred to a gas phase reactor in which the ethylene-propylene copolymerization is to be carried out, and ethylene and propylene are simultaneously added thereto. Thus, the homopolypropylene in a solid state is continuously copolymerized with the newly added ethylene and propylene as an ethylene-propylene rubber copolymer component, thereby producing an ethylene-propylene block copolymer.

In such event, the molar ratio of the ethylene content to the total amount of olefins present in the gas-phase polymerization reactor in which the second polymerization step is carried out may be 0.30 to 0.90, preferably 0.30 to 0.80, more preferably 0.30 to 0.70.

The ethylene-propylene block copolymer resin thus obtained may be mixed with conventional additives without departing from the scope of the present invention. The specific type and content of the additives are substantially the same as those of the polypropylene resin composition as described above.

Here, there is no particular limitation to the method of mixing the ethylene-propylene block copolymer resin and the additives. Any method of preparing a polypropylene resin composition known in the art to which the present invention pertains may be used as it is or as appropriately modified.

As a specific example, the ethylene-propylene block copolymer resin and the additives are supplied to a mixer such as a kneader, a roll, and a Banbury mixer, or a single- or twin-screw extruder in predetermined amounts, and they are then blended with this apparatus, thereby preparing the polypropylene resin composition of the present invention.

According to still another embodiment of the present invention, there is provided a polypropylene resin article molded from the polypropylene resin composition.

There is no particular limitation to the method for producing the molded article from the polypropylene resin composition according to the embodiment of the present invention, and any method known in the technical field of the present invention can be used. For example, the polypropylene resin composition according to the embodiment of the present invention may be molded by a conventional method such as injection molding, extrusion molding, or the like to prepare a molded article of a polypropylene resin.

Preferably, the polypropylene resin article according to the embodiment of the present invention has an elongation of 20% or more and a gloss of 80% or more. If the elongation is less than 20%, the molded article is brittle. If the gloss is less than 80%, there is a limitation to being used as a part of electronic products and home appliances that require high gloss.

The molded article of a polypropylene resin according to the embodiment of the present invention can be applied to a plastic product that requires excellent appearance characteristics and impact resistance. For example, the molded article may be used as automobile interior and exterior parts and exterior parts of home appliances and electronic products with high gloss. Preferably, the molded article may be selected from the group consisting of automobile interior and exterior parts and exterior parts of home appliances and electronic products with high gloss.

### Example

Hereinafter, the present invention is explained in detail by the following examples. However, the following examples are intended to further illustrate the present invention. The scope of the present invention is not limited thereto only.

### Examples 1 to 3 and Comparative Examples 1 to 5

### Preparation of an ethylene-propylene block copolymer

A Ziegler-Natta catalyst was obtained by supporting titanium chloride (TiCl₄) on a magnesium chloride (MgCl₂) carrier, followed by the addition of dicyclopentyldimethoxysilane as an external electron donor and triethyl aluminum as a cocatalyst for the activation of the catalyst. A homopolypropylene was prepared by supplying propylene in the presence of the Ziegler-Natta catalyst in the first to third reactors for bulk polymerization among four polymerization reactors arranged in series. The homopolypropylene thus produced was transferred to the fourth reactor for gas phase polymerization, and an ethylene-propylene block copolymer was prepared by supplying ethylene and propylene to carry out gas phase polymerization in the presence of the Ziegler-Natta catalyst. In such event, the melt index of the polymer produced in each polymerization reactor was adjusted by the amount of hydrogen fed to each polymerization reactor.

The composition and physical properties of the ethylene-propylene block copolymer thus prepared were measured by the following methods, and the results are shown in Table 1 below.
(1) Melt index (g/10 minutes)
   Melt index of an ethylene-propylene block copolymer was measured at 230°C under a load of 2.16 kg according to ASTM D 1238.
(2) Content of ethylene (B-C2; % by weight) in an ethylene-propylene block copolymer
   An ethylene-propylene block copolymer resin was subjected to an infrared absorption spectroscopy analysis. The content of ethylene contained therein was measured using the characteristic peaks of 720 cm⁻¹ and 740 cm⁻¹.
(3) Content of the ethylene-propylene rubber copolymer component (i.e., xylene soluble (XS); % by weight) in an ethylene-propylene block copolymer
   An ethylene-propylene block copolymer resin was dissolved in xylene at a concentration of 1% by weight at 140°C for 1 hour and left at room temperature for 2 hours. Then, the solvent was removed therefrom, and the weight of the extract (i.e., xylene soluble) thus obtained was measured. The weight of the xylene soluble was expressed in percent by weight based on the total weight of the ethylene-propylene block copolymer resin.
(4) Content of ethylene (XS-C2; % by mole) in the xylene soluble (XS) of an ethylene-propylene block copolymer
   The ethylene-propylene rubber copolymer component (i.e., xylene soluble) obtained in Section (3) above was subjected to an infrared absorption spectroscopy analysis to measure the content of ethylene contained therein, which was then converted to the unit of percent by mole.
(5) Ratio of intrinsic viscosities
   The intrinsic viscosity of the ethylene-propylene rubber copolymer component extracted with xylene and the intrinsic viscosity of the homopolypropylene component were measured using an intrinsic viscometer, respectively, and the ratio thereof was calculated.
(6) Glass transition temperature of a rubber phase

An injection-molded specimen was subjected to a dynamic mechanical analyzer of TA Instruments to measure the glass transition temperature of the rubber phase in the specimen. The measurement was carried out in a temperature range of -100 to 150°C while the temperature was raised at a rate of 2°C/minute with an amplitude of 15 µm and a frequency of 1 Hz. Here, the glass transition temperature of the rubber phase in the specimen was measured through the behavior of the measured storage modulus and the loss modulus ratio (tan d).

**[Table 1]**

| | Ex. 1 | Ex. 2 | Ex. 3 | C. Ex. 1 | C. Ex. 2 | C. Ex. 3 | C. Ex. 4 | C. Ex. 5 |
|---|---|---|---|---|---|---|---|---|
| B-melt index (g/10 min) | 30 | 35 | 60 | 9 | 65 | 32 | 34 | 130 |
| B-C2 (% by weight) | 4.3 | 4.0 | 5.5 | 9 | 8.5 | 8.0 | 6.1 | 5.5 |
| XS (% by weight) | 12.1 | 14.2 | 12.2 | 13.5 | 16.0 | 16.1 | 13.2 | 11.0 |
| XS-C2 (% by mole) | 37.0 | 34.8 | 47.0 | 55.0 | 51.0 | 48.0 | 51.1 | 52.0 |
| Ratio of intrinsic viscosities (η_{XS}/η_{homoPP}) | 4.8 | 4.4 | 5.2 | 1.5 | 3.0 | 2.6 | 2.9 | 2.9 |

| | | | | | | | | |
|---|---|---|---|---|---|---|---|---|
| B-melt index: the melt index of an ethylene-propylene block copolymer B-C2: the content of ethylene in an ethylene-propylene block copolymer XS: the content of an ethylene-propylene rubber copolymer component (or xylene soluble) in an ethylene-propylene block copolymer XS-C2: the content of ethylene in an ethylene-propylene rubber copolymer component Ratio of intrinsic viscosities: the ratio of intrinsic viscosities between the ethylene-propylene rubber copolymer component and the homopolypropylene component in an ethylene-propylene block copolymer | | | | | | | | |

### Preparation of a specimen

The ethylene-propylene block copolymer resins prepared in the Examples and the Comparative Examples were each injection molded at 190 to 230°C using a 150-ton Woojin injection-molding machine to obtain a specimen of the ASTM-1 standard and a plate-shaped specimen having a thickness of 2 mm.

### Test Example

The specimens obtained by molding the ethylene-propylene block copolymer resins obtained in the Examples and the Comparative Examples were each tested by the following methods. The results are shown in Tables 2 and 3 below.
(1) Defects in appearance such as flow marks
   The polypropylene resin compositions were each injection molded using a spiral flow mold having a thickness of 1.5 mm and a width of 3 cm. The molded article was photographed with a digital camera, and the ratio of contrasts between the cloudy portion and the glossy portion using an image analysis program (ImageJ). The smaller the contrast ratio between the cloudy portion and the glossy portion, the better the appearance characteristics in connection with flow marks. The degree of flow marks according to the contrast ratio is as follows.
   - 0.5 or less: flow marks are hardly observed.
   - 05 to 1.0: flow marks are observed.
   - Greater than 1.0: flow marks are clearly observed.
(2) Flexural modulus (kgf/cm²)
   Flexural modulus was measured in accordance with the ASTM D 790 method.
(3) IZOD impact strength (kgf cm/cm)
   IZOD impact strength was measured in accordance with the ASTM D256 method at room temperature (23°C) and a low temperature (-20°C).
(4) Tensile strength (kgf/cm²) and elongation (%)
   Tensile strength and elongation were measured in accordance with the ASTM D638 method.
(5) Hardness
   Hardness was measured in accordance with the ASTM D785 method.
(6) Gloss (%)
   The amount of reflected light was measured at an angle of 60° in accordance with the ASTM D523 method.

**[Table 2]**

| | | | | Ex. 1 | Ex. 2 | Ex. 3 |
|---|---|---|---|---|---|---|
| Physical property | Flexural modulus | | kgf/cm² | 14,000 | 12,600 | 17,000 |
| | IZOD impact strength | Room temp. | kgf cm/cm | 6.0 | 7.5 | 5.5 |
| | | -20°C | kgf cm/cm | 1.9 | 2.2 | 3.0 |
| | Yield tensile strength | | kgf/cm² | 280 | 270 | 310 |
| | Elongation | | % | 100 | 190 | 25 |
| | Hardness | | R scale | 88 | 83 | 99 |
| | Gloss | | % | 85 | 84 | 87 |
| | Flow mark contrast ratio | | | 0.40 | 0.35 | 0.37 |

**[Table 3]**

| | | | | C. Ex. 1 | C. Ex. 2 | C. Ex. 3 | C. Ex. 4 | C. Ex. 5 |
|---|---|---|---|---|---|---|---|---|
| Physical property | Flexural modulus | | kgf/cm² | 12,800 | 15,800 | 14,900 | 15,400 | 18,500 |
| | IZOD impact strength | Room temp. | kgf cm/cm | 11.0 | 6.1 | 7.3 | 6.1 | 4.0 |
| | | -20°C | kgf cm/cm | 4.9 | 3.2 | 3.5 | 3.0 | 2.0 |
| | Yield tensile strength | | kgf/cm² | 270 | 290 | 285 | 290 | 315 |
| | Elongation | | % | 100 | 10 | 40 | 30 | 4 |
| | Hardness | | R scale | 84 | 95 | 90 | 92 | 105 |
| | Gloss | | % | 70 | 76 | 73 | 77 | 67 |
| | Flow mark contrast ratio | | | 1.7 | 0.92 | 1.2 | 1.1 | 0.72 |

As can be seen from Tables 1 to 3, in Examples 1 to 3, in which the ratio of intrinsic viscosities between the ethylene-propylene rubber copolymer component (or xylene soluble) and the homopolypropylene component in the ethylene-propylene block copolymer resin was 3 and the content of ethylene in the ethylene-propylene rubber copolymer component was 20 to 50% by mole, the flow marks of the molded articles produced from the polypropylene resin compositions were markedly reduced, the elongation was 20% or more, and the gloss was 80% or more. In addition, the glass transition temperature, as measured by a dynamic mechanical analyzer, of the rubber phases in the ethylene-propylene block copolymer resins had a shape in which two peaks overlapped with each other in a temperature range of -55 to -30°C as shown in Fig. 1. Thus, the interface between the homopolypropylene matrix and the rubber phase was stabilized, resulting in a high elongation of the compositions.

In contrast, in Comparative Examples 1 to 5, in which the ratio of intrinsic viscosities was less than 3 or the content of ethylene in the ethylene-propylene rubber copolymer component exceeded 50% by mole, the flow marks of the molded articles produced from the polypropylene resin compositions were observed and the gloss and elongation were deteriorated. In addition, the glass transition temperature, as measured by a dynamic mechanical analyzer, of the rubber phases in the ethylene-propylene block copolymer resins showed a single peak near -50°C as shown in Fig. 2. Thus, the interface between the homopolypropylene matrix and the rubber phase was not stabilized, resulting in a low elongation of the compositions.

Accordingly, the polypropylene resin composition according to the Examples, which fall within the scope of the present invention, is excellent in moldability since it has high fluidity. The article molded from the polypropylene resin composition is excellent in balance between rigidity and impact resistance, suppressed in such defects in appearance as flow marks, and excellent in elongation and gloss. Thus, the polypropylene resin article according to the embodiment of the present invention can be advantageously used as automobile interior and exterior parts, exterior parts of home appliances and electronic products with high gloss, or the like.

## Claims

1. A polypropylene resin composition, which comprises an ethylene-propylene block copolymer resin, wherein the ethylene-propylene block copolymer resin comprises 70 to 95% by weight of a homopolypropylene component and 5 to 30% by weight of an ethylene-propylene rubber copolymer component, the content of ethylene in the ethylene-propylene block copolymer resin is 3 to 15% by weight, the content of ethylene in the ethylene-propylene rubber copolymer component is 20 to 50% by mole, the ethylene-propylene block copolymer resin has a melt index of 30 to 120 g/10 minutes when measured at 230°C under a load of 2.16 kg according to ASTM D 1238, the ratio of intrinsic viscosities between the ethylene-propylene rubber copolymer component and the homopolypropylene component in the ethylene-propylene block copolymer resin is 4 to 6, and when the polypropylene resin composition is injection molded using a spiral flow mold, the ratio of contrasts between the cloudy portion and the glossy portion is 0.5 or less.

2. The polypropylene resin composition of claim **1,** wherein the glass transition temperature, as measured by a dynamic mechanical analyzer, of the rubber phase in the ethylene-propylene block copolymer resin has a shape in which two peaks overlap with each other in a temperature range of -55 to -30°C.

3. The polypropylene resin composition of claim 1, wherein the ethylene-propylene block copolymer resin is one in which the homopolypropylene component and the ethylene-propylene rubber copolymer component are sequentially polymerized.

4. The polypropylene resin composition of claim 1, which further comprises at least one additive selected from the group consisting of a heat stabilizer, a neutralizer, a reinforcement, a filler, a weathering stabilizer, an antistatic agent, a lubricant, a slip agent, a nucleating agent, a flame retardant, a pigment, and a dye.

5. The polypropylene resin composition of claim 4, which further comprise 0.1 to 0.5 parts by weight of a heat stabilizer per 100 parts by weight of the composition, wherein the heat stabilizer is at least one selected from the group consisting of tetrakis(methylene(3,5-di-t-butyl-4-hydroxy)hydrosilylnate), 1,3,5-trimethyl-tris(3,5-di-t-butyl-4-hydroxybenzene), and tris(2,4-di-t-butylphenyl)phosphite.

6. A process for preparing the polypropylene resin composition of any one of claims 1 to 5, which comprises a first polymerization step of polymerizing a homopolypropylene in two or more consecutive reactors; and a second polymerization step of copolymerizing an ethylene-propylene rubber copolymer component by supplying ethylene and propylene in the presence of the polymerized homopolypropylene to obtain the ethylene-propylene block copolymer resin.

7. The process of claim 6 for preparing the polypropylene resin composition of any one of claims 1 to 5, wherein each polymerization step is carried out in the presence of a Ziegler-Natta catalyst, and the Ziegler-Natta catalyst is synthesized by supporting at least one titanium chloride selected from TiCl₃ and TiCl₄ on a magnesium chloride (MgCl₂) carrier.

8. The process of claim 7 for preparing the polypropylene resin composition of any one of claims 1 to 5, wherein, as a cocatalyst of the Ziegler-Natta catalyst, at least one alkyl aluminum compound selected from the group consisting of triethyl aluminum, diethylchloro aluminum, tributyl aluminum, trisisobutyl aluminum, and trioctyl aluminum is used; and, as an external electron donor, at least one organosilane compound selected from the group consisting of diphenyldimethoxysilane, phenyltrimethoxysilane, phenylethyldimethoxysilane, phenylmethyldimethoxysilane, methoxytrimethylsilane, isobutyltrimethoxysilane, diisobutyldimethoxysilane, diisopropyldimethoxysilane, di-t-butyldimethoxysilane, dicyclopentyldimethoxysilane, cyclohexylmethyldimethoxysilane, and dicyclohexyldimethoxysilane is used.

9. The process of claim 6 for preparing the polypropylene resin composition of any one of claims 1 to 5, wherein the first polymerization step and the second polymerization step are carried out in the same polymerization reactor or different polymerization reactors.

10. The process of claim 9 for preparing the polypropylene resin composition of any one of claims 1 to 5, wherein the first polymerization step is a step of polymerizing the homopolypropylene in the presence of a Ziegler-Natta catalyst in two or more bulk polymerization reactors, the second polymerization step is a step of copolymerizing the ethylene-propylene rubber copolymer component by supplying ethylene and propylene in the presence of the polymerized homopolypropylene and a Ziegler-Natta catalyst in a gas-phase polymerization reactor to obtain the ethylene-propylene block copolymer resin, and the melt index, when measured at 230°C under a load of 2.16 kg, of the homopolypropylene obtained in the final polymerization reactor of the first polymerization step is 100 to 250 g/10 minutes.

11. The process of claim 10 for preparing the polypropylene resin composition of any one of claims 1 to 5, wherein the molar ratio of the ethylene content to the total amount of olefins present in the gas-phase polymerization reactor in which the second polymerization step is carried out is 0.30 to 0.90.

12. A polypropylene resin article molded from the polypropylene resin composition according to any one of claims 1 to 5.

13. The polypropylene resin article of claim 12, which has an elongation of 20% or more, determined in accordance with ASTM D638, and a gloss of 80% or more, determined in accordance with ASTM D523.

14. The polypropylene resin article of claim 12, which is selected from the group consisting of automobile interior and exterior parts and exterior parts of home appliances and electronic products with high gloss.

## Patentansprüche

1. Polypropylenharz-Zusammensetzung, die ein Ethylen-Propylen-Blockcopolymerharz umfasst, wobei das Ethylen-Propylen-Blockcopolymerharz 70 bis 95 Gew.-% einer Homopolypropylen-Komponente und 5 bis 30 Gew.-% einer Ethylen-Propylen-Kautschukcopolymer-Komponente umfasst, der Gehalt an Ethylen in dem Ethylen-Propylen-Blockcopolymerharz 3 bis 15 Gew.-% beträgt, der Gehalt an Ethylen in der Ethylen-Propylen-Kautschukcopolymer-Komponente 20 bis 50 Mol-% beträgt, das Ethylen-Propylen-Blockcopolymerharz einen Schmelzindex von 30 bis 120 g/10 Minuten aufweist, wenn er bei 230°C unter einer Last von 2,16 kg gemäß ASTM D 1238 gemessen wird, das Verhältnis der Grenzviskositätszahlen zwischen der Ethylen-Propylen-Kautschukcopolymer-Komponente und der Homopolypropylen-Komponente in dem Ethylen-Propylen-Blockcopolymerharz 4 bis 6 beträgt und, wenn die Polypropylenharz-Zusammensetzung mit Hilfe einer Spiralflussform spritzgegossen wird, das Verhältnis der Kontraste zwischen dem trüben Teil und dem glänzenden Teil 0,5 oder weniger beträgt.

2. Polypropylenharz-Harzzusammensetzung gemäß Anspruch 1, wobei die Glasübergangstemperatur der Kautschukphase in dem Ethylen-Propylen-Blockcopolymerharz, wie sie mit einem dynamischen mechanischen Analysegerät gemessen wird, eine Form hat, bei der in einem Temperaturbereich von -55 bis -30°C zwei Peaks einander überlappen.

3. Polypropylenharz-Harzzusammensetzung gemäß Anspruch 1, wobei das Ethylen-Propylen-Blockcopolymerharz ein solches ist, bei dem die Homopolypropylen-Komponente und die Ethylen-Propylen-Kautschukcopolymer-Komponente sequenziell polymerisiert sind.

4. Polypropylenharz-Harzzusammensetzung gemäß Anspruch 1, weiterhin umfassend wenigstens ein Additiv, das aus der Gruppe ausgewählt ist, die aus einem Wärmestabilisator, einem Neutralisator, einem Verstärkungsmittel, einem Füllstoff, einem Witterungsstabilisator, einem Antistatikum, einem Schmiermittel, einem Gleitmittel, einem Keimbildner, einem Flammschutzmittel, einem Pigment und einem Farbstoff besteht.

5. Polypropylenharz-Harzzusammensetzung gemäß Anspruch 4, weiterhin umfassend 0,1 bis 0,5 Gewichtsteile eines Wärmestabilisators pro 100 Gewichtsteile der Zusammensetzung, wobei der Wärmestabilisator wenigstens einer ist, der aus der Gruppe ausgewählt ist, die aus Tetrakis-(methylen(3,5-di-t-butyl-4-hydroxy)hydrosilylnate), 1,3,5-Trimethyltris-(3,5-di-t-butyl-4-hydroxybenzol) und Tris(2,4-di-t-butylphenyl)phosphit besteht.

6. Verfahren zur Herstellung der Polypropylen-Harzzusammensetzung gemäß einem der Ansprüche 1 bis 5, umfassend einen ersten Polymerisationsschritt, bei dem ein Homopolypropylen in zwei oder mehr aufeinanderfolgenden Reaktoren polymerisiert wird; und einen zweiten Polymerisationsschritt, bei dem eine Ethylen-Propylen-Kautschukcopolymer-Komponente copolymerisiert wird, indem Ethylen und Propylen in Gegenwart des polymerisierten Homopolypropylens zugeführt werden, wobei man das Ethylen-Propylen-Blockcopolymerharz erhält.

7. Verfahren gemäß Anspruch 6 zur Herstellung der Polypropylen-Harzzusammensetzung gemäß einem der Ansprüche 1 bis 5, wobei jeder Polymerisationsschritt in Gegenwart eines Ziegler-Natta-Katalysators durchgeführt wird und der Ziegler-Natta-Katalysator dadurch synthetisiert wird, dass man wenigstens ein Titanchlorid, das aus TiCl₃ und TiCl₄ ausgewählt ist, auf einem Magnesiumchlorid(MgCl₂)-Träger vorlegt.

8. Verfahren gemäß Anspruch 7 zur Herstellung der Polypropylen-Harzzusammensetzung gemäß einem der Ansprüche 1 bis 5, wobei als Cokatalysator des Ziegler-Natta-Katalysators wenigstens eine Alkylaluminiumverbindung verwendet wird, die aus der Gruppe ausgewählt ist, die aus Triethylaluminium, Diethylchloroaluminium, Tributylaluminium, Trisisobutylaluminium und Trioctylaluminium besteht; und als externer Elektronendonor wenigstens eine Organosilanverbindung verwendet wird, die aus der Gruppe ausgewählt ist, die aus Diphenyldimethoxysilan, Phenyltrimethoxysilan, Phenylethyldimethoxysilan, Phenylmethyldimethoxysilan, Methoxytrimethylsilan, Isobutyltrimethoxysilan, Diisobutyldimethoxysilan, Diisopropyldimethoxysilan, Di-t-butyldimethoxysilan, Dicyclopentyldimethoxysilan, Cyclohexylmethyldimethoxysilan und Dicyclohexyldimethoxysilan besteht.

9. Verfahren gemäß Anspruch 6 zur Herstellung der Polypropylen-Harzzusammensetzung gemäß einem der Ansprüche 1 bis 5, wobei der erste Polymerisationsschritt und der zweite Polymerisationsschritt in demselben Polymerisationsreaktor oder in unterschiedlichen Polymerisationsreaktoren durchgeführt werden.

10. Verfahren gemäß Anspruch 9 zur Herstellung der Polypropylen-Harzzusammensetzung gemäß einem der Ansprüche 1 bis 5, wobei der erste Polymerisationsschritt ein Schritt ist, bei dem das Homopolypropylen in Gegenwart eines Ziegler-Natta-Katalysators in zwei oder mehr Massenpolymerisationsreaktoren polymerisiert wird, der zweite Polymerisationsschritt ein Schritt ist, bei dem die Ethylen-Propylen-Kautschukcopolymer-Komponente copolymerisiert wird, indem Ethylen und Propylen in Gegenwart des polymerisierten Homopolypropylens und eines Ziegler-Natta-Katalysators in einem Gasphasenpolymerisationsreaktor zugeführt werden, wobei man das Ethylen-Propylen-Blockcopolymerharz erhält, und der Schmelzindex des in dem letzten Polymerisationsreaktor des ersten Polymerisationsschritts erhaltenen Homopolypropylens, wenn er bei 230°C unter einer Last von 2,16 kg gemessen wird, 100 bis 250 g/10 Minuten beträgt.

11. Verfahren gemäß Anspruch 10 zur Herstellung der Polypropylen-Harzzusammensetzung gemäß einem der Ansprüche 1 bis 5, wobei das Stoffmengenverhältnis des Ethylengehalts zu der Gesamtmenge an Olefinen, die in dem Gasphasenpolymerisationsreaktor, in dem der zweite Polymerisationsschritt durchgeführt wird, vorhanden sind, 0,30 bis 0,90 beträgt.

12. Polypropylenharz-Gegenstand, geformt aus der Polyethylenharz-Zusammensetzung gemäß einem der Ansprüche 1 bis 5.

13. Polypropylenharz-Gegenstand gemäß Anspruch 12, der eine gemäß ASTM D638 bestimmte Dehnung von 20% oder mehr und einen gemäß ASTM D523 bestimmten Glanz von 80% oder mehr aufweist.

14. Polypropylenharz-Gegenstand gemäß Anspruch 12, der aus der Gruppe ausgewählt ist, die aus Automobilinnen- und -außenteilen sowie Außenteilen von elektrischen Haushaltsgeräten und elektronischen Produkten mit hohem Glanz besteht.

## Revendications

1. Composition résine de polypropylène, qui comprend une résine de copolymère séquencé éthylène-propylène, dans laquelle la résine de copolymère séquencé éthylène-propylène comprend 70 à 95 % en poids d'un composant homopolypropylène et 5 à 30 % en poids d'un composant copolymère de caoutchouc éthylène-propylène, la teneur en éthylène dans la résine de copolymère séquencé éthylène-propylène est de 3 à 15 % en poids, la teneur en éthylène dans le composant copolymère de caoutchouc éthylène-propylène est de 20 à 50 % en moles, la résine de copolymère séquencé éthylène-propylène a un indice de fusion de 30 à 120 g/10 minutes lorsqu'il est mesuré à 230°C sous une charge de 2,16 kg selon la norme ASTM D 1238, le rapport des viscosités intrinsèques entre le composant copolymère de caoutchouc éthylène-propylène et le composant homopolypropylène dans la résine de copolymère séquencé éthylène-propylène est de 4 à 6, et lorsque la composition de résine de polypropylène est moulée par injection à l'aide d'un moule à écoulement en spirale, le rapport de contraste entre la partie trouble et la partie brillante est de 0,5 ou moins.

2. Composition résine de polypropylène selon la revendication 1, dans laquelle la température de transition vitreuse, mesurée par un analyseur mécanique dynamique, de la phase caoutchouc dans la résine de copolymère séquencé éthylène-propylène a une forme dans lequel deux pics se chevauchent dans une plage de température de -55 à -30°C.

3. Composition résine de polypropylène selon la revendication 1, dans laquelle la résine de copolymère séquencé éthylène-propylène est une résine dans laquelle le composant homopolypropylène et le composant copolymère de caoutchouc éthylène-propylène sont polymérisés séquentiellement.

4. Composition résine de polypropylène selon la revendication 1, comprenant en outre au moins un additif choisi dans le groupe consistant en un stabilisant thermique, un neutralisant, un renfort, une charge, un stabilisant aux intempéries, un agent antistatique, un lubrifiant, un agent glissant, un agent de nucléation, un retardateur de flamme, un pigment et un colorant.

5. Composition résine de polypropylène selon la revendication 4, comprenant en outre 0,1 à 0,5 partie en poids d'un stabilisant thermique pour 100 parties en poids de la composition, dans laquelle ledit stabilisant thermique est au moins l'un choisi dans le groupe consistant en tétrakis-(méthylène(3,5-di-t-butyl-4-hydroxy)hydrosilylnate), 1,3,5-triméthyl-tris-(3,5-di-t-butyl-4-hydroxybenzène) et tris(2,4-di-t-butylphényl)phosphite.

6. Procédé pour produire la composition de résine polypropylène selon l'une quelconque des revendications 1 à 5, comprenant une première étape de polymérisation consistant à polymériser un homopolypropylène dans deux ou plusieurs réacteurs consécutifs ; et une deuxième étape de polymérisation consistant à copolymériser un composant copolymère de caoutchouc éthylène-propylène en fournissant de l'éthylène et du propylène en présence de l'homopolypropylène polymérisé pour obtenir ladite résine de copolymère séquencé éthylène-propylène.

7. Procédé selon la revendication 6 pour produire la composition de résine polypropylène selon l'une quelconque des revendications 1 à 5, dans lequel chaque étape de polymérisation est réalisée en présence d'un catalyseur Ziegler-Natta, et le catalyseur Ziegler-Natta est synthétisé en supportant au moins un chlorure de titane choisi parmi TiCl₃ et TiCl₄ sur un support de chlorure de magnésium (MgCl₂).

8. Procédé selon la revendication 7 pour produire la composition de résine polypropylène selon l'une quelconque des revendications 1 à 5, dans lequel en tant que cocatalyseur du catalyseur Ziegler-Natta, au moins un composé d'alkylaluminium choisi dans le groupe constitué par le triéthylaluminium, le diéthylchloroaluminium, le tributylealuminium, le trisisobutylaluminium et le trioctylaluminium est utilisé ; et, en tant que donneur d'électrons externe, on utilise au moins un composé organosilane choisi dans le groupe constitué par le diphényldiméthoxysilane, le phényltriméthoxysilane, le phényléthyldiméthoxysilane, le phénylméthyldiméthoxysilane, le méthoxytriméthylsilane, l'isobutyltriméthoxysilane, le diisobutyldiméthoxysilane, le diisopropyldiméthoxysilane, le di-t-butyl-diméthoxysilane, le dicyclopentyldiméthoxysilane, le cyclohexylméthyl-diméthoxysilane et le dicyclohexyldiméthoxysilane.

9. Procédé selon la revendication 6 pour produire la composition de résine polypropylène selon l'une quelconque des revendications 1 à 5, dans lequel la première étape de polymérisation et la deuxième étape de polymérisation sont réalisées dans le même réacteur de polymérisation ou dans des réacteurs de polymérisation différents.

10. Procédé selon la revendication 9 pour produire la composition de résine polypropylène selon l'une quelconque des revendications 1 à 5, dans lequel la première étape de polymérisation est une étape de polymérisation de l'homopolypropylène en présence d'un catalyseur Ziegler-Natta dans deux ou plusieurs réacteurs de polymérisation en masse, la deuxième étape de polymérisation est une étape de copolymérisation du composant copolymère de caoutchouc éthylène-propylène en fournissant de l'éthylène et du propylène en présence de l'homopolypropylène polymérisé et d'un catalyseur Ziegler-Natta dans un réacteur de polymérisation en phase gazeuse pour obtenir ladite résine de copolymère séquencé éthylène-propylène, et l'indice de fusion, mesuré à 230 °C sous une charge de 2,16 kg, de l'homopolypropylène obtenu dans le réacteur de polymérisation final de la première étape de polymérisation est de 100 à 250 g/10 minutes.

11. Procédé selon la revendication 10 pour produire la composition de résine polypropylène selon l'une quelconque des revendications 1 à 5, dans lequel le rapport molaire de la teneur en éthylène à la quantité totale d'oléfines présentes dans le réacteur de polymérisation en phase gazeuse dans lequel la deuxième étape de polymérisation est réalisée est de 0,30 à 0,90.

12. Article en résine de polypropylène, fabriqué par moulage à partir de la composition de résine polypropylène selon l'une quelconque des revendications 1 à 5.

13. Article en résine de polypropylène selon la revendication 12, qui présente un allongement de 20 % ou plus, déterminé conformément à la norme ASTM D638, et une brillance de 80 % ou plus, déterminée conformément à la norme ASTM D523.

14. Article en résine de polypropylène selon la revendication 12, qui est choisi dans le groupe consistant en pièces intérieures et extérieures d'automobiles et pièces extérieures d'appareils électroménagers et de produits électroniques à haute brillance.
